# EUROPÄISCHE PATENTSCHRIFT

(11) **EP 3 023 609 B1**
(45) Veröffentlichungstag und Bekanntmachung des Hinweises auf die Patenterteilung: **15.04.2020**
(21) Anmeldenummer: 15002658.1
(22) Anmeldetag: 12.09.2015
(51) Int. Cl.: F01P 7/16, F02B 29/04, F01P 3/18, F01P 7/10, F01P 7/04, F02G 5/00, B60H 1/00

(54) **KÜHLSYSTEM FÜR EIN FAHRZEUG, INSBESONDERE FÜR EIN NUTZFAHRZEUG**
COOLING SYSTEM FOR A VEHICLE, IN PARTICULAR A COMMERCIAL VEHICLE
SYSTÈME DE REFROIDISSEMENT POUR UN VÉHICULE, NOTAMMENT POUR UN VÉHICULE UTILITAIRE

(30) Priorität: 20.11.2014 DE 102014017245
(43) Veröffentlichungstag der Anmeldung: 25.05.2016
(73) Patentinhaber: MAN Truck & Bus SE, 80995 München (DE)
(72) Erfinder: Schydlo, Alexander, 81243 München (DE)
(74) Vertreter: Liebl, Thomas

(56) Entgegenhaltungen:
- WO-A1-2011/149409
- WO-A1-2012/087223
- DE-A1-102011 117 102
- US-A1- 2014 124 170

## Beschreibung

Die Erfindung betrifft ein Kühlsystem für ein Fahrzeug, insbesondere für ein Nutzfahrzeug, nach dem Oberbegriff des Patentanspruches 1, ein Verfahren zum Betreiben eines Kühlsystems für ein Fahrzeug, insbesondere für ein Nutzfahrzeug, nach dem Oberbegriff des Patentanspruches 11 sowie ein Fahrzeug, insbesondere ein Nutzfahrzeug, mit dem Kühlsystem zur Durchführung des Verfahrens nach Patentanspruch 12.

Es ist bei Fahrzeugen, insbesondere bei Nutzfahrzeugen, bekannt, einen Hochtemperatur-Kühlmittelkreislauf (HT-Kühlmittelkreislauf) und einen, eine niedrigere Temperatur als der HT-Kühlmittelkreislauf aufweisenden Niedrigtemperatur-Kühlmittelkreislauf (NT-Kühlmittelkreislauf) vorzusehen, mittels denen zu kühlende Komponenten des Fahrzeugs flüssigkeitsgekühlt werden. Mittels des HT-Kühlmittelkreislaufs wird dabei üblicherweise eine Brennkraftmaschine des Fahrzeugs gekühlt, da für diese, insbesondere aus Reibungsgründen, ein höherer Temperaturbereich optimal ist. Es ist auch bekannt, mittels des HT-Kühlmittelkreislaufs noch weitere zu kühlende Komponenten des Fahrzeugs, beispielsweise einen AGR-Kühler einer Abgasrückführung des Fahrzeugs, zu kühlen. Mittels des NT-Kühlmittelkreislaufs wird regelmäßig ein Kondensator einer Klimaanlage oder ein indirekter kühlmittelgekühlter Ladeluftkühler des Fahrzeugs gekühlt, da für diese Komponenten, insbesondere zur Erhöhung deren Effizienz, ein niedrigerer Temperaturbereich optimal ist.

Des Weiteren ist es auch bekannt, bei einem Fahrzeug, insbesondere bei einem Nutzfahrzeug, eine Energierückgewinnungs-Einrichtung (ER-Einrichtung) vorzusehen, mittels der aus einer Abwärme einer Brennkraftmaschine des Fahrzeugs nutzbare Energie rückgewonnen bzw. erzeugt werden kann. Bei dieser nutzbaren Energie kann es sich beispielsweise um mechanische, hydraulische oder aber auch elektrische Energie handeln. Die ER-Einrichtungen sind dabei häufig derart ausgebildet, dass die nutzbare Energie mittels eines rechtsläufigen thermodynamischen Kreisprozesses rückgewonnen wird. Die ER-Einrichtungen umfassen daher üblicherweise wenigstens einen wärmezuführenden Wärmeübertrager (Wärmesenke), mittels dem Abwärme bzw. ein Abwärmestrom der Brennkraftmaschine in den thermodynamischen Kreisprozess eingetragen wird, und wenigstens einen wärmeabführenden Wärmeübertrager (Wärmequelle), mittels dem Wärme bzw. ein Wärmestrom aus dem thermodynamischen Kreisprozess ausgetragen wird. Um eine große Menge an Energie zu erzeugen bzw. um die ER-Einrichtung mit einem hohem Wirkungsgrad betreiben zu können, ist es erforderlich, den wärmeabführenden Wärmeübertrager möglichst stark zu kühlen bzw. die Temperatur des wärmeabführenden Wärmeübertragers möglichst gering zu halten. Der wärmeabführende Wärmeübertrager wird daher regelmäßig ebenfalls mittels des NT-Kühlmittelkreislaufs gekühlt.

Aus der WO 2012 / 115 572 A1 geht beispielsweise ein Kühlsystem für ein Fahrzeug hervor, bei dem ein Hochtemperatur-Kühlmittelkreislauf zur Kühlung einer Brennkraftmaschine des Fahrzeugs und ein von dem Hochtemperatur-Kühlmittelkreislauf getrennter bzw. separierter zusätzlicher Niedrigtemperatur-Kühlmittelkreislauf zur Kühlung mehrerer Komponenten des Fahrzeugs vorgesehen ist. Mittels des Niedrigtemperatur-Kühlkreislaufs wird hier beispielsweise ein wärmeabführender Wärmeübertrager einer Energierückgewinnungs-Einrichtung gekühlt, mittels der aus einer Abwärme der Brennkraftmaschine nutzbare mechanische Energie rückgewonnen werden kann. Zudem wird mittels des Niedrigtemperatur-Kühlmittelkreislauf hier auch ein Ölkühler, ein Kondensator einer Klimaanlage und wenigstens eine elektrische Komponente des Fahrzeuges gekühlt.

Aufgrund der Vielzahl der zu kühlenden Komponenten ist die Kühlung der Komponenten trotz der Verwendung des HT-Kühlmittelkreislauf und des NT-Kühlmittelkreislaufs häufig nicht optimal, da die Komponenten unterschiedliche Anforderungen an eine optimale Kühlung haben. Zudem ändern sich diese Anforderungen regelmäßig auch zeitlich bzw. in Abhängigkeit von der Betriebssituation des Fahrzeugs, wodurch eine optimale Kühlung der Komponenten weiter erschwert wird.

Aus der WO 2011/149409 A1 ist ein gattungsgemäßes Kühlsystem für ein Fahrzeug bekannt. Aus der US 2014/124170 A1, aus der DE 10 2011 117102 A1 und aus der WO 2012/087223 A1 sind weitere Kühlsysteme für Fahrzeug bekannt.

Aufgabe der Erfindung ist es, ein Kühlsystem für ein Fahrzeug, insbesondere für ein Nutzfahrzeug, und ein Verfahren zum Betreiben eines Kühlsystems für ein Fahrzeug, insbesondere für ein Nutzfahrzeug bereitzustellen, mittels denen die Kühlung der mittels des Kühlsystems zu kühlenden Komponenten auf einfache Weise optimiert wird.

Diese Aufgabe wird durch die Merkmale der unabhängigen Ansprüche 1, 11 und 12 gelöst. Bevorzugte Weiterbildungen sind in den abhängigen Ansprüchen offenbart.

Es wird ein Kühlsystem für ein Fahrzeug, insbesondere für ein Nutzfahrzeug, vorgesehen, mit einem Hochtemperatur-Kühlmittelkreislauf (HT-Kühlmittelkreislauf) zur Flüssigkeitskühlung wenigstens einer zu kühlenden HT-Komponente des Fahrzeugs, die eine Brennkraftmaschine des Fahrzeugs ist, und mit einem, eine niedrigere Temperatur als der HT-Kühlmittelkreislauf aufweisenden Niedrigtemperatur-Kühlmittelkreislauf (NT-Kühlmittelkreislauf) zur Flüssigkeitskühlung wenigstens einer zu kühlenden NT-Komponente des Fahrzeugs, insbesondere eines Ladeluftkühlers des Fahrzeugs. Es ist ein, eine niedrigere Temperatur als der HT-Kühlmittelkreislauf und eine höhere Temperatur als der NT-Kühlmittelkreislauf aufweisender Mitteltemperatur-Kühlmittelkreislauf (MT-Kühlmittelkreislauf) vorgesehen, mittels dem wenigstens eine zu kühlende MT-Komponente des Fahrzeugs, insbesondere wenigstens eine elektrische Komponente des Fahrzeugs, flüssigkeitsgekühlt werden kann.

Auf diese Weise wird die Kühlung der mittels des Kühlsystems zu kühlenden Komponenten auf einfache Weise optimiert, da nun zusätzlich zu dem HT-Kühlmittelkreislauf und dem NT-Kühlmittelkreislauf der MT-Kühlmittelkreislauf zur Kühlung der Komponenten verwendet wird. So kann die Vielzahl der zu kühlenden Komponenten deutlich einfacher in dem für sie optimalen Temperaturbereich gehalten werden. Auch bauraumbedingte Hindernisse, die einer optimalen Kühlung der Komponenten regelmäßig entgegenstehen, können so auf einfache Weise umgangen werden. Derartige bauraumbedingte Hindernisse können beispielsweise der Platzbedarf eines Kühlers zur Kühlung des Kühlmittelkreislaufs oder die Anordnung der zu kühlenden Komponenten an dem Fahrzeug sein. Der MT-Kühlmittelkreislauf eignet sich dabei besonders zur Kühlung von zu kühlenden elektrischen Komponenten des Fahrzeugs, da diese bei einer Kühlung mittels des HT-Kühlmittelkreislaufs häufig zu stark erwärmt und bei einer Kühlung mittels des NT-Kühlmittelkreislaufs häufig zu stark gekühlt werden. Mittels des MT-Kühlmittelkreislaufes können sie in dem für sie optimalen Temperaturbereich gehalten werden, wodurch die Zuverlässigkeit der elektrischen Komponenten und der Wirkungsgrad des Gesamtsystems deutlich erhöht wird.

Des Weiteren sind die Begrifflichkeiten HT-Kühlmittelkreislauf, NT-Kühlmittelkreislauf und MT-Kühlmittelkreislauf hier derart auszulegen, dass deren Minimaltemperaturen im Vergleich zueinander vorwiegend bzw. durchschnittlich niedriger oder höher sind. Die Minimaltemperatur des NT-Kühlmittelkreislaufs kann daher beispielsweise für kurze Zeitintervalle auch gleich oder höher sein als die Minimaltemperatur des HT-Kühlmittelkreislaufs oder des MT-Kühlmittelkreislaufs. Ebenso kann die Minimaltemperatur des HT-Kühlmittelkreislaufs für kurze Zeitintervalle auch gleich oder niedriger sein als die Minimaltemperatur des MT-Kühlmittelkreislaufs oder des NT-Kühlmittelkreislaufs.

In einer bevorzugten Ausgestaltung des erfindungsgemäßen Kühlsystems weist das Fahrzeug eine Abgasrückführungs-Einrichtung auf, mittels der zumindest ein Teil des Abgases der Brennkraftmaschine des Fahrzeugs wieder der Brennkraftmaschine zugeführt werden kann. Ein AGR-Kühler zur Kühlung des mittels der Abgasrückführungs-Einrichtung rückgeführten Abgases ist eine mittels des HT-Kühlmittelkreislaufs zu kühlende HT-Komponente. Der HT-Kühlmittelkreislauf eignet sich besonders zur Kühlung des AGR-Kühlers, da mittels des HT-Kühlmittelkreislaufs das heiße Abgas in der Abgasrückführungs-Einrichtung effektiv gekühlt wird und gleichzeitig die anderen Kühlmittelkreisläufe nicht durch den hohen Wärmeeintrag des Abgases belastet werden. Mittels des HT-Kühlmittelkreislaufs wird die Brennkraftmaschine des Fahrzeugs gekühlt, wobei bevorzugt der AGR-Kühler, in HT-Kühlmittel-Strömungsrichtung gesehen, stromab der Brennkraftmaschine dem HT-Kühlmittelkreislauf zugeordnet ist, um einen hohen Wärmestrom von der Brennkraftmaschine abführen zu können.

Die wenigstens eine NT-Komponente ist vorzugsweise ein indirekter kühlmittelgekühlter Kondensator einer Klimaanlage, da dieser in einem besonders niedrigen Temperaturbereich gebracht werden muss, um die Funktion der Klimaanlage zuverlässig sicherzustellen.

In einer bevorzugten Ausführung ist die MT-Komponente eine elektrische Komponente. Die elektrische Komponente kann eine Batterie, insbesondere eine Starterbatterie, des Fahrzeugs sein, um die Startbarkeit des Fahrzeugs zuverlässig sicherzustellen. Weiter bevorzugt ist die elektrische Komponente eine Komponente einer elektrischen Antriebseinrichtung, insbesondere einer Hybridantriebseinrichtung, des Fahrzeugs. Dadurch kann die Effizienz der elektrischen Antriebseinrichtung deutlich verbessert werden. Bevorzugt ist die wenigstens eine MT-Komponente ein Ladeluftkühler des Fahrzeugs, um die, der Brennkraftmaschine des Fahrzeugs zugeführte Verbrennungsluft effektiv zu kühlen. Durch die Kühlung der Verbrennungsluft wird der Wirkungsgrad der Brennkraftmaschine deutlich erhöht.

Es ist eine Energierückgewinnungs-Einrichtung (ER-Einrichtung) vorgesehen, mittels aus einer Abwärme der Brennkraftmaschine des Fahrzeugs Energie rückgewonnen werden kann, wobei die ER-Einrichtung wenigstens einen wärmezuführenden ER-Wärmeübertrager aufweist, mittels dem die Abwärme der Brennkraftmaschine der ER-Einrichtung zugeführt werden kann, und wobei die ER-Einrichtung wenigstens einen wärmeabführenden ER-Wärmeübertrager aufweist, mittels dem Wärme von der ER-Einrichtung abgeführt werden kann. Der wärmeabführende ER-Wärmeübertrager der ER-Einrichtung bildet eine zu kühlende MT-Komponente und eine zu kühlende NT-Komponente aus. Durch die Kühlung des wärmeabführenden ER-Wärmeübertragers mittels des MT-Kühlmittelkreislaufs und mittels des NT-Kühlmittelkreislaufs wird sichergestellt, dass ein möglichst hoher Wärmestrom von der ER-Einrichtung abgeführt wird. Auf diese Weise wird der Wirkungsgrad der ER-Einrichtung erhöht. Vorzugsweise ist die ER-Einrichtung dabei derart ausgebildet, dass die Energie mittels eines thermodynamischen Prozesses, insbesondere mittels eines geschlossenen thermodynamischen Kreisprozesses, rückgewonnen werden kann. Der geschlossene thermodynamische Kreisprozess kann dabei beispielsweise der Clausius-Rankine-Kreisprozess sein.

Die drei Kühlmittelkreisläufe sind strömungstechnisch voneinander getrennt ausgebildet, um diese Kühlmittelkreisläufe auf besonders einfache und zuverlässige Weise betreiben zu können.

Weiter bevorzugt weist der HT-Kühlmittelkreislauf eine, insbesondere unabhängig von einer Drehzahl der Brennkraftmaschine betreibbare, HT-Fördereinrichtung, insbesondere eine Pumpe, auf, mittels der das HT-Kühlmittel durch den HT-Kühlmittelkreislauf gefördert werden kann. Mittels der HT-Fördereinrichtung kann das HT-Kühlmittel auf einfache und zuverlässige Weise durch den HT-Kühlmittelkreislauf gefördert werden. Das Betreiben der HT-Fördereinrichtung unabhängig von der Drehzahl der Brennkraftmaschine des Fahrzeugs hat dabei den Vorteil, dass der HT-Kühlmittelstrom durch den HT-Kühlmittelkreislauf unabhängig von der Drehzahl der Brennkraftmaschine wie gewünscht eingestellt werden kann. Dadurch ist der HT-Kühlmittelkreislauf besonders flexibel. So kann die Kühlung der mittels des HT-Kühlmittelkreislaufs zu kühlenden Komponenten an sich zeitlich ändernde Kühlanforderungen der Komponenten, beispielsweise der Brennkraftmaschine, angepasst werden, so dass die Komponenten stets optimal gekühlt werden. Um die HT-Fördereinrichtung unabhängig von der Drehzahl der Brennkraftmaschine betreiben zu können, kann die HT-Fördereinrichtung beispielsweise elektrisch angetrieben werden. Ebenso ist es beispielsweise auch möglich, eine Viskokupplung zwischen die Brennkraftmaschine und die HT-Fördereinrichtung zu schalten. Weiter bevorzugt weist der HT-Kühlmittelkreislauf eine HT-Kühleinrichtung, insbesondere einen Kühler, auf, mittels der der HT-Kühlmittelkreislauf gekühlt werden kann. Mittels der HT-Kühleinrichtung kann der HT-Kühlmittelkreislauf auf einfache und funktionssichere Weise gekühlt werden.

Ebenso kann auch der NT-Kühlmittelkreislauf eine, insbesondere unabhängig von einer Drehzahl einer Brennkraftmaschine des Fahrzeugs betreibbare, NT-Fördereinrichtung, insbesondere eine Pumpe, aufweisen, mittels der das NT-Kühlmittel durch den NT-Kühlmittelkreislauf gefördert werden kann. Zudem kann der NT-Kühlmittelkreislauf auch eine NT-Kühleinrichtung, insbesondere einen Kühler, aufweisen, mittels der der NT-Kühlmittelkreislauf gekühlt werden kann.

Auch der MT-Kühlmittelkreislauf kann eine, insbesondere von einer Drehzahl einer Brennkraftmaschine des Fahrzeugs betreibbare, MT-Fördereinrichtung, insbesondere eine Pumpe aufweisen, mittels der das MT-Kühlmittel durch den MT-Kühlmittelkreislauf gefördert werden kann. Zudem kann auch der MT-Kühlmittelkreislauf eine MT-Kühleinrichtung, insbesondere einen Kühler, aufweisen, mittels der der MT-Kühlmittelkreislauf gekühlt werden kann.

Vorzugsweise ist eine Regel- und/oder Steuereinrichtung vorgesehen, mittels der wenigstens eine Kühlungs-Stelleinrichtung des Fahrzeugs zur Einstellung und/oder Verstellung der Kühlung in Abhängigkeit von wenigstens einem Fahrzeugparameter geregelt werden kann. Bevorzugt ist vorgesehen, dass der wenigstens eine Fahrzeugparameter die aktuelle Betriebssituation einer Brennkraftmaschine des Fahrzeugs und/oder wenigstens eine an einem definierten Bereich des HT-Kühlmittelkreislaufs gemessene Temperatur des HT-Kühlmittels und/oder wenigstens eine an einem definierten Bereich des NT-Kühlmittelkreislaufs gemessene Temperatur des HT-Kühlmittels und/oder wenigstens eine an einem definierten Bereich des MT-Kühlmittelkreislaufs gemessene Temperatur des MT-Kühlmittels und/oder der Kraftstoffverbrauch des Fahrzeugs ist. Mittels einer derartigen Regel- und/oder Steuereinrichtung kann die Kühlung der mittels des Kühlsystems zu kühlenden Komponenten selbsttätig bzw. automatisch in Abhängigkeit von dem wenigstens einem Fahrzeugparameter optimiert werden.

Bevorzugt ist die Kühlungs-Stelleinrichtung eine Fördereinrichtung eines Kühlmittelkreislaufs des Fahrzeugs. Alternativ und/oder zusätzlich kann die Kühlungs-Stelleinrichtung auch eine Kühleinrichtung eines Kühlmittelkreislaufs des Fahrzeugs sein. Mittels derartiger Kühlungs-Stelleinrichtungen kann die Kühlung der zu kühlenden Komponenten auf einfache und effektive Weise eingestellt bzw. verstellt werden.

Weiter alternativ und/oder zusätzlich kann die Kühlungs-Stelleinrichtung auch ein Ventilatorelement zur Kühlung wenigstens eines Kühlmittelkreislaufs des Fahrzeugs sein. Die Kühlungs-Stelleinrichtung kann weiter auch eine Ventileinrichtung eines Kühlmittelkreislaufs des Fahrzeugs sein. Ebenso kann die Kühlungs-Stelleinrichtung auch ein verlagerbares Klappenelement des Fahrzeugs sein, durch dessen Verlagerung ein Luftstrom durch einen frontseitigen Lufteinlass, insbesondere durch einen Kühlergrill, des Fahrzeugs zumindest teilweise gesperrt und freigegeben werden kann. Mittels derartig ausgebildeten Kühlungs-Stelleinrichtungen kann die Kühlung der zu kühlenden Komponenten ebenfalls einfach und effektiv eingestellt bzw. verstellt werden.

Die sich aus der erfindungsgemäßen Verfahrensführung ergebenden Vorteile sind identisch mit den bereits gewürdigten Vorteilen des erfindungsgemäßen Kühlsystems, so dass diese hier nicht wiederholt werden.

Des Weiteren wird auch ein Fahrzeug, insbesondere ein Nutzfahrzeug, mit dem erfindungsgemäßen Kühlsystem und/oder zur Durchführung des erfindungsgemäßen Verfahrens beansprucht. Die sich hieraus ergebenden Vorteile sind identisch mit den Vorteilen des erfindungsgemäßen Kühlsystems und des erfindungsgemäßen Verfahrens, so dass auch diese hier nicht wiederholt werden.

Die Erfindung und ihre vorteilhaften Aus- und/oder Weiterbildungen sowie deren Vorteile werden nachfolgend anhand von Zeichnungen lediglich beispielhaft näher erläutert.

Es zeigen:
- Fig. 1: in einer Darstellung von vorne einen Lastkraftwagen mit dem erfindungsgemäßen Kühlsystem;
- Fig. 2: in einer schematischen Darstellung den Aufbau des Kühlsystems; und
- Fig. 3: in einer schematischen Darstellung den Aufbau eines Wärmeübertragers des Kühlsystems.

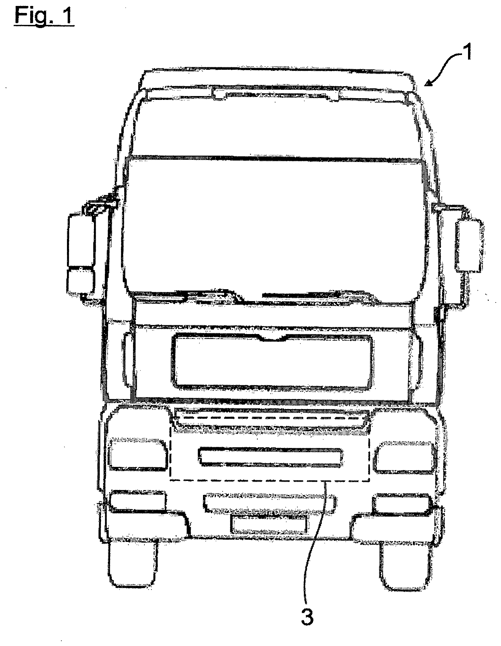

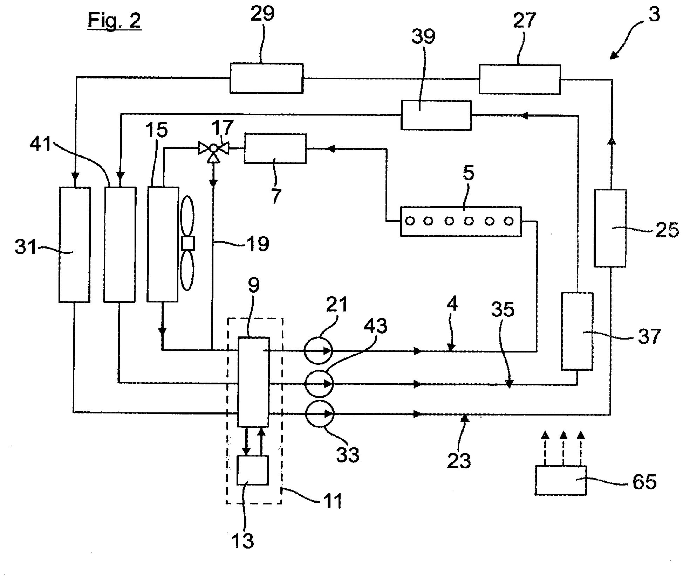

In Fig. 1 ist ein hier beispielhaft als Lastkraftwagen 1 ausgebildetes Fahrzeug von vorne gezeigt. Der Lastkraftwagen 1 weist ein in Fig. 1 mit gestrichelten Linien angedeutetes Kühlsystem 3 auf. Der Aufbau des Kühlsystems 3 ist schematisch in Fig. 2 gezeigt.

Gemäß Fig. 2 weist das Kühlsystem 3 einen Hochtemperatur-Kühlmittelkreislauf (HT-Kühlmittelkreislauf) 4 auf, mittels dem hier beispielhaft eine Brennkraftmaschine 5, ein AGR-Kühler 7 und ein Wärmeübertrager 9 des Lastkraftwagens 1 gekühlt werden. Die Brennkraftmaschine 5 bildet die Antriebseinrichtung des Lastkraftwagens 1 aus. Mittels des AGR-Kühlers 7 wird das mittels einer in den Figuren nicht gezeigten Abgasrückführungs-Einrichtung des Lastkraftwagens 1 rückgeführte Abgas der Brennkraftmaschine 5 gekühlt. Der Wärmeübertrager 9 ist Bestandteil einer in Fig. 2 mit gestrichelten Linien angedeuteten Energierückgewinnungs-Einrichtung 11 (ER-Einrichtung), mittels der aus einer Abwärme der Brennkraftmaschine 5 nutzbare Energie rückgewonnen bzw. erzeugt werden kann. Der Wärmeübertrager 9 bildet dabei einen wärmeabführenden Wärmeübertrager (Wärmesenke) aus, mittels dem Wärme von der ER-Einrichtung 11 abgeführt wird. Die ER-Einrichtung 11 weist auch einen wärmezuführenden Wärmeübertrager 13 (Wärmequelle) auf, mittels dem die Abwärme der Brennkraftmaschine 5 der ER-Einrichtung 11 zugeführt wird. Die Abwärme der Brennkraftmaschine 5 kann dabei beispielsweise die in dem Abgas der Brennkraftmaschine 5 gespeicherte Wärme sein. Die Rückgewinnung bzw. Erzeugung der Energie mittels der ER-Einrichtung 11 kann beispielsweise mittels eines geschlossenen thermodynamischen Kreisprozesses, beispielsweise des Clausius-Rankine-Kreisprozesses, erfolgen, wobei mittels des Wärmeübertragers 9 Wärme aus dem Kreisprozess ausgetragen wird, und wobei mittels des Wärmeübertragers 13 Wärme in den Kreisprozess eingetragen wird.

Wie in Fig. 2 weiter gezeigt ist, ist der AGR-Kühler 7, im HT-Kühlmittel-Strömungsrichtung gesehen, hier lediglich beispielhaft, stromab der Brennkraftmaschine 5 in dem HT-Kühlmittelkreislauf 4 angeordnet. Stromab des AGR-Kühlers 7 ist hier ein Kühler 15 zur Kühlung des HT-Kühlmittels in dem HT-Kühlmittelkreislauf 4 angeordnet. Zwischen dem AGR-Kühler 7 und dem Kühler 15 ist hier beispielhaft ein als Thermostat ausgebildetes Mehrwege-Ventil 17 angeordnet. Sofern die Temperatur des HT-Kühlmittels dabei einen definierten Wert übersteigt, wird mittels des Mehrwege-Ventils 17 der HT-Kühlmittelstrom von dem AGR-Kühler 7 zu dem Kühler 15 freigegeben und der HT-Kühlmittelstrom über eine Bypasseinrichtung 19, mittels der der HT-Kühlmittelstrom an dem Kühler 15 vorbeigeleitet werden kann, gesperrt. Sofern die Temperatur des HT-Kühlmittels geringer ist als der definierte Wert, wird der HT-Kühlmittelstrom durch den Kühler 15 gesperrt und der HT-Kühlmittelstrom durch die Bypasseinrichtung 19 freigegeben. Weiter ist, in HT-Kühlmittel-Strömungsrichtung gesehen, hier stromab des Kühlers 15 und der Bypasseinrichtung 19 der wärmeabführende Wärmeübertrager 9 der ER-Einrichtung 11 in dem HT-Kühlmittelkreislauf 4 angeordnet. Stromab des wärmezuführenden Wärmeübertragers 13 ist hier zudem eine, vorzugsweise unabhängig von einer Drehzahl der Brennkraftmaschine 5 betreibbare, Pumpe 21 in dem HT-Kühlmittelkreislauf 4 angeordnet, mittels der das HT-Kühlmittel durch den HT-Kühlmittelkreislauf 4 gefördert wird.

Des Weiteren weist das Kühlsystem 3 auch einen, hier beispielshaft von dem HT-Kühlmittelkreislauf 4 strömungstechnisch getrennten bzw. separierten, eine niedrigere Temperatur als der HT-Kühlmittelkreislauf 4 aufweisenden Niedrigtemperatur-Kühlmittelkreislauf 23 (NT-Kühlmittelkreislauf) auf. Mittels des NT-Kühlmittelkreislaufs 23 werden hier beispielhaft ein Ölkühler 25, ein indirekter Ladeluftkühler 29, ein Kondensator 27 einer Klimaanlage und der Wärmeübertrager 9 des Lastkraftwagens 1 gekühlt. Mittels des Ölkühlers 25 wird dabei ein in einem Ölkreislauf des Lastkraftwagens 1 strömendes Öl gekühlt. Mittels des Kondensators 27 wird Wärme von dem Kältemittel der Klimaanlage abgeführt bzw. das Kältemittel der Klimaanlage kondensiert. Der Ladeluftkühler 29 ist dem Ansaugtrakt des Lastkraftwagens 1 derart zugeordnet, dass die durch den Ansaugtrakt strömende, von einem Verdichter eines Abgasturboladers verdichtete Verbrennungsluft mittels des Ladeluftkühlers 29 gekühlt wird.

Wie in Fig. 2 weiter gezeigt ist, ist der Kondensator 27 der Klimaanlage, in NT-Kühlmittel-Strömungsrichtung gesehen, hier beispielhaft stromauf des Ölkühlers 25 in dem NT-Kühlmittelkreislauf 23 angeordnet. Der Ladeluftkühler 29 ist hier, in NT-Kühlmittel-Strömungsrichtung gesehen, stromauf des Kondensators 27 der Klimaanlage in dem NT-Kühlmittelkreislauf 23 angeordnet. Stromab des Ladeluftkühlers 29 ist ein Kühler 31 in dem NT-Kühlmittelkreislauf 23 angeordnet, mittels dem der NT-Kühlmittelkreislauf 23 gekühlt wird. Stromab des Kühlers 31 ist der wärmeabführende Wärmeübertrager 9 der ER-Einrichtung 11 dem NT-Kühlmittelkreislauf 23 zugeordnet. Zwischen dem wärmeabführenden Wärmeübertrager 9 und dem Ölkühler 25 ist hier zudem eine, vorzugsweise unabhängig von der Drehzahl der Brennkraftmaschine 5 betreibbare, Pumpe 33 in dem NT-Kühlmittelkreislauf 23 angeordnet, mittels der das NT-Kühlmittel durch den NT-Kühlmittelkreislauf 23 gefördert wird.

Des Weiteren weist das Kühlsystem 3 auch einen, hier beispielhaft von dem HT-Kühlmittelkreislauf 4 und dem NT-Kühlmittelkreislauf 23 strömungstechnisch getrennten bzw. separierten Mitteltemperatur-Kühlmittelkreislauf 35 (MT-Kühlmittelkreislauf) auf. Der MT-Kühlmittelkreislauf 35 weist eine niedrigere Temperatur als der HT-Kühlmittelkreislauf 4 und eine höhere Temperatur als der NT-Kühlmittelkreislauf 23 auf. Mittels des NT-Kühlmittelkreislaufs 35 werden hier beispielhaft ein indirekter Ladeluftkühler 37, eine Starterbatterie 39 und der Wärmeübertrager 9 des Lastkraftwagens 1 gekühlt. Der Ladeluftkühler 37 ist dabei, ebenso wie der Ladeluftkühler 29, dem Ansaugtrakt des Lastkraftwagens 1 derart zugeordnet, dass die durch den Ansaugtrakt strömende, von einem Verdichter eines Abgasturboladers verdichtete Verbrennungsluft mittels des Ladeluftkühlers 37 gekühlt wird. Vorzugsweise ist der Ladeluftkühler 29 dabei, in Verbrennungsluft-Strömungsrichtung gesehen, stromab eines Verdichters eines ersten Abgasturboladers in dem Ansaugtrakt des Lastkraftwagens 1 angeordnet. Stromab des Ladeluftkühlers 29 ist dann ein Verdichter eines zweiten Abgasturboladers des Lastkraftwagens 1 und noch weiter stromab der Ladeluftkühler 37 in dem Ansaugtrakt des Lastkraftwagens 1 angeordnet. Auf diese Weise kann die Verbrennungsluft besonders effektiv verdichtet und gekühlt werden.

Mittels der Starterbatterie 39 des Lastkraftwagens 1 kann die Brennkraftmaschine 5 des Lastkraftwagens 1 gestartet werden, wenn sie ausgeschaltet ist. Durch die Kühlung der Starterbatterie 39 mittels des MT-Kühlmittelkreislaufs 35 wird die Starterbatterie 39 in einem für sie optimalen Temperaturbereich gehalten, wodurch die Ladeeigenschaften, Lebensdauer und Zuverlässigkeit der Starterbatterie 39 deutlich erhöht werden. Anstelle oder zusätzlich zu der Starterbatterie 39 könnten natürlich auch andere elektrische Komponenten des Lastkraftwagens 1 mittels des MT-Kühlmittelkreislaufs 35 gekühlt werden, bei denen die Kühlung mittels des MT-Kühlmittelkreislaufs 35 vorteilhaft ist.

Wie in Fig. 2 weiter gezeigt ist, ist die Starterbatterie 39, in MT-Kühlmittel-Strömungsrichtung gesehen, hier stromab des Ladeluftkühlers 37 in dem MT-Kühlmittelkreislauf 35 angeordnet. Stromab der Starterbatterie 39 ist hier zudem ein Kühler 41 in dem MT-Kühlmittelkreislauf 35 angeordnet, mittels dem der MT-Kühlmittelkreislauf 35 gekühlt wird. Stromab des Kühlers 41 ist hier der wärmeabführende Wärmeübertrager 9 der ER-Einrichtung 11 dem MT-Kühlmittelkreislauf 35 zugeordnet. Weiter ist, in MT-Kühlmittel-Strömungsrichtung gesehen, zwischen dem wärmeabführenden Wärmeübertrager 9 und dem Ladeluftkühler 37 eine, vorzugsweise unabhängig von der Drehzahl der Brennkraftmaschine 5 betreibbare, Pumpe 43 in dem MT-Kühlmittelkreislauf 35 angeordnet, mittels der das MT-Kühlmittel durch den MT-Kühlmittelkreislauf 35 gefördert wird.

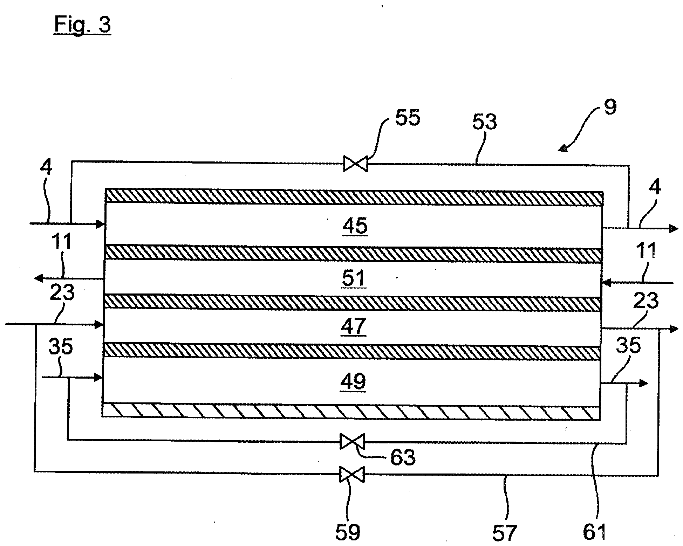

In Fig. 3 ist ein beispielhafter Aufbau des wärmeabführenden Wärmeübertragers 9 gezeigt. Der wärmeabführende Wärmeübertrager 9 weist einen ersten Strömungskanal 45 auf, der von dem HT-Kühlmittel des HT-Kühlmittelkreislaufs 4 durchströmt werden kann. Zudem weist der wärmeabführende Wärmeübertrager 9 hier auch einen zweiten Strömungskanal 47 auf, der von dem NT-Kühlmittel des NT-Kühlmittelkreislaufs 23 durchströmt werden kann. Weiter weist der wärmeabführende Wärmeübertrager 9 auch einen dritten Strömungskanal 49 auf, der von dem MT-Kühlmittel des MT-Kühlmittelkreislaufs 35 durchströmt werden kann. Zudem weist der wärmeabführende Wärmeübertrager 9 auch einen vierten Strömungskanal 51 auf, der von dem zu kühlenden Arbeitsmittel der ER-Einrichtung 11 durchströmt werden kann. Die Strömungskanäle 45, 47, 49, 51 sind hier beispielhaft parallel zueinander verlaufend und geradlinig verlaufend ausgebildet. Zudem ist der wärmeabführende Wärmeübertrager 9 hier derart mit den Kühlmittekreisläufen 4, 23, 35 und der ER-Einrichtung 11 verbunden, dass die Strömungskanäle 45, 47, 49 in einer ersten Strömungsrichtung von dem Kühlmittel der Kühlmittekreisläufe 4, 23, 35 durchströmt werden und der Strömungskanal 51 in einer der ersten Strömungsrichtung entgegengesetzten zweiten Strömungsrichtung von dem Arbeitsmittel der ER-Einrichtung 11 durchströmt wird. Durch den Aufbau des Wärmeübertragers 9 sind die strömungstechnisch voneinander getrennten Kühlmittelkreisläufe 4, 23, 35 und die ER-Einrichtung 11 wärmeübertragend miteinander verbunden bzw. wärmeübertragend miteinander verbindbar.

Wie in Fig. 3 weiter gezeigt ist, ist dem wärmeabführenden Wärmeübertrager 9 hier eine HT-Bypasseinrichtung 53 zugeordnet, mittels der der HT-Kühlmittelstrom zumindest teilweise an dem wärmeabführenden Wärmeübertrager 9 vorbeigeleitet werden kann. Der HT-Bypasseinrichtung 53 ist hier zudem eine Ventileinrichtung, hier beispielhaft ein stufenloses verstellbares Durchgangsventil 55, zugeordnet, mittels der der HT-Kühlmittelstrom durch die HT-Bypasseinrichtung 53 und somit auch durch den wärmeabführenden Wärmeübertrager 9 eingestellt bzw. verstellt werden kann. Des Weiteren ist dem wärmeabführenden Wärmeübertrager 9 hier auch eine NT-Bypasseinrichtung 57 zugeordnet, mittels der der NT-Kühlmittelstrom zumindest teilweise an dem wärmeabführenden Wärmeübertrager 9 vorbeigeleitet werden kann. Der NT-Bypasseinrichtung 57 ist hier zudem eine Ventileinrichtung, hier beispielhaft ein stufenlos verstellbares Durchgangsventil 59, zugeordnet, mittels der der NT-Kühlmittelstrom durch die NT-Bypasseinrichtung 57 und somit auch durch dem wärmeabführenden Wärmeübertrager 9 eingestellt bzw. verstellt werden kann. Zudem ist dem wärmeabführenden Wärmeübertrager 9 hier auch eine MT-Bypasseinrichtung 61 zugeordnet, mittels der der MT-Kühlmittelstrom zumindest teilweise an dem wärmeabführenden Wärmeübertrager 9 vorbeigeleitet werden kann. Der MT-Bypasseinrichtung 61 ist hier zudem eine Ventileinrichtung, hier beispielhaft ein stufenlos verstellbares Durchgangsventil 63, zugeordnet, mittels der der MT-Kühlmittelstrom durch die MT-Bypasseinrichtung 61 und somit auch durch den wärmeabführenden Wärmeübertrager eingestellt bzw. verstellt werden kann.

Mittels der Durchgangsventile 55, 59, 63 kann hier somit zum einen die Kühlung des Wärmeübertragers 9 der ER-Einrichtung 11 eingestellt bzw. verstellt werden. Zudem kann mittels der Durchgangsventile 55, 59, 63 hier auch die Wärmeübertragung zwischen den einzelnen Kühlmittelkreisläufen 4, 23, 35 eingestellt bzw. verstellt werden, wodurch das erfindungsgemäße Kühlsystem besonders flexibel ist. Gemäß Fig. 2 werden die Durchgangsventile 55, 59, 63 hier mittels einer Regel- und/oder Steuereinrichtung 65 geregelt bzw. gesteuert. Mittels der Regel- und/oder Steuereinrichtung 65 werden hier zudem auch die Pumpen 25, 33, 43 des Kühlsystems 3 und ein Ventilatorelement des Lastkraftwagens 1 zur unterstützenden Kühlung der Kühlmittelkreisläufe 23, 35, 4 des Lastkraftwagens 1 geregelt bzw. gesteuert. Zudem werden mittels der Regel- und/oder Steuereinrichtung 65 auch verlagerbare, in den Figuren nicht gezeigte Klappenelemente des Lastkraftwagens 1 gesteuert bzw. geregelt, durch deren Verlagerung ein Luftstrom durch einen frontseitigen Kühlergrill (Fig. 1) des Lastkraftwagens 1 gesperrt und freigegeben werden kann. Die Steuerung bzw. Regelung mittels der Regel- und/oder Steuereinrichtung 65 erfolgt dabei in Abhängigkeit von wenigstens einem Fahrzeugparameter. Der wenigstens eine Fahrzeugparameter kann dabei beispielsweise die aktuelle Betriebssituation der Brennkraftmaschine 5 des Lastkraftwagens 1 oder Temperaturen der Kühlmittel in den Kühlmittelkreisläufe 4, 23, 35 sein.

### Bezugszeichenliste

- 1: Lastkraftwagen
- 3: Kühlsystem
- 4: HT-Kühlmittelkreislauf
- 5: Brennkraftmaschine
- 7: AGR-Kühler
- 9: Wärmeübertrager
- 11: ER-Einrichtung
- 13: Wärmeübertrager
- 15: Kühler
- 17: Mehrwege-Ventil
- 19: Bypasseinrichtung
- 21: Pumpe
- 23: NT-Kühlmittelkreislauf
- 25: Ölkühler
- 27: Kondensator
- 29: indirekter Ladeluftkühler
- 31: Kühler
- 33: Pumpe
- 35: MT-Kühlmittelkreislauf
- 37: indirekter Ladeluftkühler
- 39: Starterbatterie
- 41: Kühler
- 43: Pumpe
- 45: Strömungskanal
- 47: Strömungskanal
- 49: Strömungskanal
- 51: Strömungskanal
- 53: HT-Bypasseinrichtung
- 55: Durchgangsventil
- 57: NT-Bypasseinrichtung
- 59: Durchgangsventil
- 61: MT-Bypasseinrichtung
- 63: Durchgangsventil
- 65: Regel- und/oder Steuereinrichtung

## Patentansprüche

1. Kühlsystem für ein Fahrzeug (1), mit einem Hochtemperatur-Kühlmittelkreislauf (HT-Kühlmittelkreislauf, 4) zur Flüssigkeitskühlung wenigstens einer zu kühlenden HT-Komponente des Fahrzeugs (1), die eine Brennkraftmaschine (5) des Fahrzeugs (1) ist, und mit einem, eine niedrigere Temperatur als der HT-Kühlmittelkreislauf (4) aufweisenden Niedrigtemperatur-Kühlmittelkreislauf (NT-Kühlmittelkreislauf, 23) zur Flüssigkeitskühlung wenigstens einer zu kühlenden NT-Komponente (25, 27, 29) des Fahrzeugs (1), wobei ein, eine niedrigere Temperatur als der HT-Kühlmittelkreislauf (4) und eine höhere Temperatur als der NT-Kühlmittelkreislauf (23) aufweisender Mitteltemperatur-Kühlmittelkreislauf (MT-Kühlmittelkreislauf, 35) vorgesehen ist, mittels dem wenigstens eine zu kühlende MT-Komponente (37, 39) des Fahrzeugs (1) flüssigkeitskühlbar ist, wobei diese drei Kühlmittelkreisläufe (4, 23, 35) strömungstechnisch voneinander getrennt sind, wobei eine Energierückgewinnungs-Einrichtung (ER-Einrichtung, 11) vorgesehen ist, mittels der aus einer Abwärme der Brennkraftmaschine (5) des Fahrzeugs (1) Energie rückgewinnbar ist, wobei die ER-Einrichtung (11) wenigstens einen wärmezuführenden Wärmeübertrager (13) aufweist, mittels dem die Abwärme der Brennkraftmaschine (5) der ER-Einrichtung (11) zuführbar ist, und wobei die ER-Einrichtung (11) wenigstens einen wärmeabführenden Wärmeübertrager (9) aufweist, mittels dem Wärme von der ER-Einrichtung (11) abführbar ist, **dadurch gekennzeichnet, dass** der wärmeabführende Wärmeübertrager (9) der ER-Einrichtung (11) eine zu kühlende MT-Komponente und eine zu kühlende NT-Komponente ausbildet, und dass die drei strömungstechnisch voneinander getrennten Kühlmittelkreisläufe (4, 23, 35) und die Energierückgewinnungs-Einrichtung (11) mittels des wärmeabführenden Wärmeübertragers (9) wärmeübertragend miteinander verbunden sind, dass der wärmeabführende Wärmeübertrager (9) einen ersten Strömungskanal (45) aufweist, der von dem HT-Kühlmittel des HT-Kühlmittelkreislaufs (4) durchströmt ist, dass der wärmeabführende Wärmeübertrager (9) einen zweiten Strömungskanal (47) aufweist, der von dem NT-Kühlmittel des NT-Kühlmittelkreislaufs (23) durchströmt ist, dass der wärmeabführende Wärmeübertrager (9) einen dritten Strömungskanal (49) aufweist, der von dem MT-Kühlmittel des MT-Kühlmittelkreislaufs (35) durchströmt ist, dass der wärmeabführende Wärmeübertrager (9) einen vierten Strömungskanal (51) aufweist, der von dem zu kühlenden Arbeitsmittel der ER-Einrichtung (11) durchströmt ist, dass die Strömungskanäle (45, 47, 49, 51) parallel zueinander verlaufend und geradlinig verlaufend ausgebildet sind, und dass der wärmeabführende Wärmeübertrager (9) derart mit den Kühlmittelkreisläufen (4, 23, 35) und der ER-Einrichtung (11) verbunden ist, dass die ersten bis dritten Strömungskanäle (45, 47, 49) in einer ersten Strömungsrichtung von dem Kühlmittel der Kühlmittekreisläufe (4, 23, 35) durchströmt werden und der vierte Strömungskanal (51) in einer der ersten Strömungsrichtung entgegengesetzten zweiten Strömungsrichtung von dem Arbeitsmittel der ER-Einrichtung (11) durchströmt wird.

2. Kühlsystem nach Anspruch 1, **dadurch gekennzeichnet, dass** das Fahrzeug (1) eine Abgasrückführungs-Einrichtung aufweist, mittels der zumindest ein Teil des Abgases der Brennkraftmaschine (5) des Fahrzeugs (1) wieder der Brennkraftmaschine (5) zuführbar ist, und dass ein AGR-Kühler (7) zur Kühlung des mittels der Abgasrückführungs-Einrichtung rückgeführten Abgases eine HT-Komponente ist.

3. Kühlsystem nach Anspruch 1 oder 2, **dadurch gekennzeichnet, dass** die wenigstens eine NT-Komponente ein Kondensator (27) einer Klimaanlage des Fahrzeugs (1) ist.

4. Kühlsystem nach einem der vorhergehenden Ansprüche, **dadurch gekennzeichnet, dass** die wenigstens eine MT-Komponente ein Ladeluftkühler (37) des Fahrzeugs (1) ist, und/oder dass die wenigstens eine MT-Komponente eine elektrische Komponente (39) des Fahrzeugs (1) ist.

5. Kühlsystem nach einem der vorhergehenden Ansprüche, **dadurch gekennzeichnet, dass** der HT-Kühlmittelkreislauf (4) eine HT-Fördereinrichtung (21) aufweist, mittels der das HT-Kühlmittel durch den HT-Kühlmittelkreislauf (4) förderbar ist, und/oder dass der HT-Kühlmittelkreislauf (4) eine HT-Kühleinrichtung (15) aufweist, mittels der der HT-Kühlmittelkreislauf (4) kühlbar ist.

6. Kühlsystem nach einem der vorhergehenden Ansprüche, **dadurch gekennzeichnet, dass** der MT-Kühlmittelkreislauf (35) eine MT-Fördereinrichtung (43) aufweist, mittels der das MT-Kühlmittel durch den MT-Kühlmittelkreislauf (35) förderbar ist, und/oder dass der MT-Kühlmittelkreislauf (35) eine MT-Kühleinrichtung (41) aufweist, mittels der der MT-Kühlmittelkreislauf (35) kühlbar ist.

7. Kühlsystem nach einem der vorhergehenden Ansprüche, **dadurch gekennzeichnet, dass** der NT-Kühlmittelkreislauf (23) eine NT-Fördereinrichtung (33) aufweist, mittels der das NT-Kühlmittel durch den NT-Kühlmittelkreislauf (23) förderbar ist, und/oder dass der NT-Kühlmittelkreislauf (23) eine NT-Kühleinrichtung (31) aufweist, mittels der der NT-Kühlmittelkreislauf (23) kühlbar ist.

8. Kühlsystem nach einem der vorhergehenden Ansprüche, **dadurch gekennzeichnet, dass** eine Regel- und/oder Steuereinrichtung (65) vorgesehen ist, mittels der wenigstens eine Kühlungs-Stelleinrichtung des Fahrzeugs zur Einstellung und/oder Verstellung der Kühlung in Abhängigkeit von wenigstens einem Fahrzeugparameter regelbar ist.

9. Kühlsystem nach Anspruch 8, **dadurch gekennzeichnet, dass** die Kühlungs-Stelleinrichtung eine Fördereinrichtung (21, 33, 43) eines Kühlmittelkreislaufs (4, 23, 35) ist, und/oder dass die Kühlungs-Stelleinrichtung eine Kühleinrichtung (15, 31, 41) eines Kühlmittelkreislaufs (4, 23, 35) ist.

10. Kühlsystem nach Anspruch 8 oder 9, **dadurch gekennzeichnet, dass** die Kühlungs-Stelleinrichtung ein Ventilatorelement des Fahrzeugs (1) zur Kühlung wenigstens eines Kühlmittelkreislaufs (4, 23, 35) des Fahrzeugs (1) ist, und/oder dass die Kühlungs-Stelleinrichtung eine Ventileinrichtung (55, 59, 63) eines Kühlmittelkreislaufs (4, 23, 35) des Fahrzeugs (1) ist, und/oder dass die Kühlungs-Stelleinrichtung ein verlagerbares Klappenelement des Fahrzeugs (1) ist, durch dessen Verlagerung ein Luftstrom durch einen frontseitigen Lufteinlass des Fahrzeugs (1) zumindest teilweise sperrbar und freigebbar ist.

11. Verfahren zum Betreiben eines Kühlsystems für ein Fahrzeug (1), mit einem Hochtemperatur-Kühlmittelkreislauf (HT-Kühlmittelkreislauf, 4) zur Flüssigkeitskühlung wenigstens einer zu kühlenden HT-Komponente des Fahrzeugs (1), die eine Brennkraftmaschine des Fahrzeugs (1) ist, und mit einem, eine niedrigere Temperatur als der HT-Kühlmittelkreislauf (4) aufweisenden Niedrigtemperatur-Kühlmittelkreislauf (NT-Kühlmittelkreislauf, 23) zur Flüssigkeitskühlung wenigstens einer zu kühlenden NT-Komponente (25, 27, 29) des Fahrzeugs (1), wobei ein, eine niedrigere Temperatur als der HT-Kühlmittelkreislauf (4) und eine höhere Temperatur als der NT-Kühlmittelkreislauf (23) aufweisender Mitteltemperatur-Kühlmittelkreislauf (MT-Kühlmittelkreislauf, 35) vorgesehen ist, mittels dem wenigstens eine zu kühlende MT-Komponente (37, 39) des Fahrzeugs (1) flüssigkeitsgekühlt wird, wobei diese drei Kühlmittelkreisläufe (4, 23, 35) strömungstechnisch voneinander getrennt sind, wobei eine Energierückgewinnungs-Einrichtung (ER-Einrichtung, 11) vorgesehen ist, mittels der aus einer Abwärme der Brennkraftmaschine (5) des Fahrzeugs (1) Energie rückgewinnbar ist, wobei die ER-Einrichtung (11) wenigstens einen wärmezuführenden Wärmeübertrager (13) aufweist, mittels dem die Abwärme der Brennkraftmaschine (5) der ER-Einrichtung (11) zuführbar ist, und wobei die ER-Einrichtung (11) wenigstens einen wärmeabführenden Wärmeübertrager (9) aufweist, mittels dem Wärme von der ER-Einrichtung (11) abführbar ist, **dadurch gekennzeichnet, dass** der wärmeabführende Wärmeübertrager (9) der ER-Einrichtung (11) eine zu kühlende MT-Komponente und eine zu kühlende NT-Komponente ausbildet, und dass die drei strömungstechnisch voneinander getrennten Kühlmittelkreisläufe (4, 23, 35) und die Energierückgewinnungs-Einrichtung (11) mittels des wärmeabführenden Wärmeübertragers (9) wärmeübertragend miteinander verbunden sind, dass der wärmeabführende Wärmeübertrager (9) einen ersten Strömungskanal (45) aufweist, der von dem HT-Kühlmittel des HT-Kühlmittelkreislaufs (4) durchströmt ist, dass der wärmeabführende Wärmeübertrager (9) einen zweiten Strömungskanal (47) aufweist, der von dem NT-Kühlmittel des NT-Kühlmittelkreislaufs (23) durchströmt ist, dass der wärmeabführende Wärmeübertrager (9) einen dritten Strömungskanal (49) aufweist, der von dem MT-Kühlmittel des MT-Kühlmittelkreislaufs (35) durchströmt ist, dass der wärmeabführende Wärmeübertrager (9) einen vierten Strömungskanal (51) aufweist, der von dem zu kühlenden Arbeitsmittel der ER-Einrichtung (11) durchströmt ist, dass die Strömungskanäle (45, 47, 49, 51) parallel zueinander verlaufend und geradlinig verlaufend ausgebildet sind, und dass der wärmeabführende Wärmeübertrager (9) derart mit den Kühlmittelkreisläufen (4, 23, 35) und der ER-Einrichtung (11) verbunden ist, dass die ersten bis dritten Strömungskanäle (45, 47, 49) in einer ersten Strömungsrichtung von dem Kühlmittel der Kühlmittekreisläufe (4, 23, 35) durchströmt werden und der vierte Strömungskanal (51) in einer der ersten Strömungsrichtung entgegengesetzten zweiten Strömungsrichtung von dem Arbeitsmittel der ER-Einrichtung (11) durchströmt wird.

12. Fahrzeug, mit einem Kühlsystem nach einem der Ansprüche 1 bis 10 zur Durchführung eines Verfahrens nach Anspruch 11.

## Claims

1. Cooling system for a vehicle (1), with a high-temperature coolant circuit (HT coolant circuit, 4) for liquid cooling of at least one HT component to be cooled of the vehicle (1), which HT component is an internal combustion engine (5) of the vehicle (1), and with a low-temperature coolant circuit (LT coolant circuit, 23) which has a lower temperature than the HT coolant circuit (4) for liquid cooling of at least one LT component (25, 27, 29) to be cooled of the vehicle (1), a medium-temperature coolant circuit (MT coolant circuit, 35) being provided which has a lower temperature than the HT coolant circuit (4) and a higher temperature than the LT coolant circuit (23) and by means of which at least one MT component (37, 39) to be cooled of the vehicle (1) can be liquid-cooled, the said three coolant circuits (4, 23, 35) being separated from one another in flow terms, an energy recovery device (ER device, 11) being provided, by means of which energy can be recovered from a waste heat of the internal combustion engine (5) of the vehicle (1), the ER device (11) having at least one heat-supplying heat exchanger (13), by means of which the waste heat of the internal combustion engine (5) can be fed to the ER device (11), and the ER device (11) having at least one heat-dissipating heat exchanger (9), by means of which heat can be dissipated from the ER device (11), **characterized in that** the heat-dissipating heat exchanger (9) of the ER device (11) configures an MT component to be cooled and an LT component to be cooled, and **in that** the three coolant circuits (4, 23, 35) which are separated from one another in flow terms and the energy recovery device (11) are connected to one another in a heat-transmitting manner by means of the heat-dissipating heat exchanger (9), **in that** the heat-dissipating heat exchanger (9) has a first flow duct (45) which is flowed through by the HT coolant of the HT coolant circuit (4), **in that** the heat-dissipating heat exchanger (9) has a second flow duct (47) which is flowed through by the LT coolant of the LT coolant circuit (23), **in that** the heat-dissipating heat exchanger (9) has a third flow duct (49) which is flowed through by the MT coolant of the MT coolant circuit (35), **in that** the heat-dissipating heat exchanger (9) has a fourth flow duct (51) which is flowed through by the operating medium to be cooled of the ER device (11), **in that** the flow ducts (45, 47, 49, 51) are configured so as to run parallel to one another and so as to run in a rectilinear manner, and **in that** the heat-dissipating heat exchanger (9) is connected to the coolant circuits (4, 23, 35) and the ER device (11) in such a way that the first to third flow ducts (45, 47, 49) are flowed through in a first flow direction by the coolant of the coolant circuits (4, 23, 35), and the fourth flow duct (51) is flowed through by the operating medium of the ER device (11) in a second flow direction which is opposed to the first flow direction.

2. Cooling system according to Claim 1, **characterized in that** the vehicle (1) has an exhaust gas recirculation device, by means of which at least one part of the exhaust gas of the internal combustion engine (5) of the vehicle (1) can be fed to the internal combustion engine (5) again, and **in that** an EGR cooler (7) for cooling the exhaust gas which is recirculated by means of the exhaust gas recirculation device is an HT component.

3. Cooling system according to Claim 1 or 2, **characterized in that** the at least one LT component is a condenser (27) of an air conditioning system of the vehicle (1).

4. Cooling system according to one of the preceding claims, **characterized in that** the at least one MT component is an intercooler (37) of the vehicle (1), and/or **in that** the at least one MT component is an electric component (39) of the vehicle (1).

5. Cooling system according to one of the preceding claims, **characterized in that** the HT coolant circuit (4) has an HT conveying device (21), by means of which the HT coolant can be conveyed through the HT coolant circuit (4), and/or **in that** the HT coolant circuit (4) has an HT cooling device (15), by means of which the HT coolant circuit (4) can be cooled.

6. Cooling system according to one of the preceding claims, **characterized in that** the MT coolant circuit (35) has an MT conveying device (43), by means of which the MT coolant can be conveyed through the MT coolant circuit (35), and/or **in that** the MT coolant circuit (35) has an MT cooling device (41), by means of which the MT coolant circuit (35) can be cooled.

7. Cooling system according to one of the preceding claims, **characterized in that** the LT coolant circuit (23) has an LT conveying device (33), by means of which the LT coolant can be conveyed through the LT coolant circuit (23), and/or **in that** the LT coolant circuit (23) has an LT cooling device (31), by means of which the LT coolant circuit (23) can be cooled.

8. Cooling system according to one of the preceding claims, **characterized in that** a regulating and/or control device (65) is provided, by means of which at least one cooling actuating device of the vehicle for setting and/or adjusting the cooling can be regulated in a manner which is dependent on at least one vehicle parameter.

9. Cooling system according to Claim 8, **characterized in that** the cooling actuating device is a conveying device (21, 33, 43) of a coolant circuit (4, 23, 35), and/or **in that** the cooling actuating device is a cooling device (15, 31, 41) of a coolant circuit (4, 23, 35).

10. Cooling system according to Claim 8 or 9, **characterized in that** the cooling actuating device is a fan element of the vehicle (1) for cooling at least one coolant circuit (4, 23, 35) of the vehicle (1), and/or **in that** the cooling actuating device is a valve device (55, 59, 63) of a coolant circuit (4, 23, 35) of the vehicle (1), and/or **in that** the cooling actuating device is a movable flap element of the vehicle (1), by way of the movement of which an air flow through a front-side air inlet of the vehicle (1) can be at least partially shut off and released.

11. Method for operating a cooling system for a vehicle (1), with a high-temperature coolant circuit (HT coolant circuit, 4) for liquid cooling of at least one HT component to be cooled of the vehicle (1) which is an internal combustion engine of the vehicle (1), and with a low-temperature coolant circuit (LT coolant circuit, 23) which has a lower temperature than the HT coolant circuit (4) for liquid cooling of at least one LT component (25, 27, 29) to be cooled of the vehicle (1), a medium-temperature coolant circuit (MT coolant circuit, 35) being provided which has a lower temperature than the HT coolant circuit (4) and a higher temperature than the LT coolant circuit (23), and by means of which at least one MT component (37, 39) to be cooled of the vehicle (1) is liquid-cooled, the said three coolant circuits (4, 23, 35) being separated from one another in flow terms, an energy recovery device (ER device, 11) being provided, by means of which energy can be recovered from a waste heat of the internal combustion engine (5) of the vehicle (1), the ER device (11) having at least one heat-supplying heat exchanger (13), by means of which the waste heat of the internal combustion engine (5) can be fed to the ER device (11), and the ER device (11) having at least one heat-dissipating heat exchanger (9), by means of which heat can be dissipated from the ER device (11), **characterized in that** the heat-dissipating heat exchanger (9) of the ER device (11) configures an MT component to be cooled and an LT component to be cooled, and **in that** the three coolant circuits (4, 23, 35) which are separated from one another in flow terms and the energy recovery device (11) are connected to one another in a heat-transmitting manner by means of the heat-dissipating heat exchanger (9), **in that** the heat-dissipating heat exchanger (9) has a first flow duct (45) which is flowed through by the HT coolant of the HT coolant circuit (4), **in that** the heat-dissipating heat exchanger (9) has a second flow duct (47) which is flowed through by the LT coolant of the LT coolant circuit (23), **in that** the heat-dissipating heat exchanger (9) has a third flow duct (49) which is flowed through by the MT coolant of the MT coolant circuit (35), **in that** the heat-dissipating heat exchanger (9) has a fourth flow duct (51) which is flowed through by the operating medium to be cooled of the ER device (11), **in that** the flow ducts (45, 47, 49, 51) are configured so as to run parallel to one another and so as to run in a rectilinear manner, and **in that** the heat-dissipating heat exchanger (9) is connected to the coolant circuits (4, 23, 35) and the ER device (11) in such a way that the first to third flow ducts (45, 47, 49) are flowed through in a first flow direction by the coolant of the coolant circuits (4, 23, 35), and the fourth flow duct (51) is flowed through by the operating medium of the ER device (11) in a second flow direction which is opposed to the first flow direction.

12. Vehicle, with a cooling system according to one of Claims 1 to 10 for carrying out a method according to Claim 11.

## Revendications

1. Système de refroidissement pour un véhicule (1), comprenant un circuit de réfrigérant à haute température (circuit de réfrigérant HT, 4) pour le refroidissement par liquide d'au moins un composant HT à refroidir du véhicule (1), qui est le moteur à combustion interne (5) du véhicule (1), et comprenant un circuit de réfrigérant à basse température (circuit de réfrigérant NT, 23) présentant une plus basse température que le circuit de réfrigérant HT (4), pour le refroidissement par liquide d'au moins un composant NT à refroidir (25, 27, 29) du véhicule (1), un circuit de réfrigérant à moyenne température (circuit de réfrigérant MT, 35), présentant une plus basse température que le circuit de réfrigérant HT (4) et une plus haute température que le circuit de réfrigérant NT (23) étant prévu, au moyen duquel au moins un composant MT à refroidir (37, 39) du véhicule (1) peut être refroidi par liquide, ces trois circuits de réfrigérant (4, 23, 35) étant séparés fluidiquement les uns des autres,
un dispositif de récupération d'énergie (dispositif ER, 11) étant prévu, au moyen duquel de l'énergie peut être récupérée à partir d'une chaleur perdue du moteur à combustion interne (5) du véhicule (1), le dispositif ER (11) présentant au moins un échangeur de chaleur (13) acheminant de la chaleur, au moyen duquel de la chaleur perdue du moteur à combustion interne (5) peut être acheminée au dispositif ER (11), et le dispositif ER (11) présentant au moins un échangeur de chaleur (9) évacuant de la chaleur, au moyen duquel de la chaleur peut être évacuée du dispositif ER (11), **caractérisé en ce que** l'échangeur de chaleur (9) évacuant de la chaleur du dispositif ER (11) constitue un composant MT à refroidir et un composant NT à refroidir, et **en ce que** les trois circuits de réfrigérant (4, 23, 35) séparés fluidiquement les uns des autres et le dispositif de récupération d'énergie (11) sont connectés les uns aux autres par transfert thermique au moyen de l'échangeur de chaleur (9) évacuant de la chaleur, **en ce que** l'échangeur de chaleur (9) évacuant de la chaleur présente un premier canal d'écoulement (45) qui est parcouru par le réfrigérant HT du circuit de réfrigérant HT (4), **en ce que** l'échangeur de chaleur (9) évacuant de la chaleur présente un deuxième canal d'écoulement (47) qui est parcouru par le réfrigérant NT du circuit de réfrigérant NT (23), **en ce que** l'échangeur de chaleur (9) évacuant de la chaleur présente un troisième canal d'écoulement (49) qui est parcouru par le réfrigérant MT du circuit de réfrigérant MT (35), **en ce que** l'échangeur de chaleur (9) évacuant de la chaleur présente un quatrième canal d'écoulement (51) qui est parcouru par le fluide de travail à refroidir du dispositif ER (11), **en ce que** les canaux d'écoulement (45, 47, 49, 51) sont réalisés de manière à s'étendre parallèlement les uns aux autres et en ligne droite, et **en ce que** l'échangeur de chaleur (9) évacuant de la chaleur est connecté aux circuits de réfrigérant (4, 23, 35) et au dispositif ER (11) de telle sorte que les premier à troisième canaux d'écoulement (45, 47, 49) soient parcourus par le réfrigérant des circuits de réfrigérant (4, 23, 35) dans une première direction d'écoulement et que le quatrième canal d'écoulement (51) soit parcouru par le fluide de travail du dispositif ER (11) dans une deuxième direction d'écoulement opposée à la première direction d'écoulement.

2. Système de refroidissement selon la revendication 1, **caractérisé en ce que** le véhicule (1) présente un dispositif de recirculation de gaz d'échappement au moyen duquel une partie du gaz d'échappement du moteur à combustion interne (5) du véhicule (1) peut être réacheminée au moteur à combustion interne (5) et **en ce qu'**un refroidisseur AGR (7) pour le refroidissement du gaz d'échappement recirculé au moyen du dispositif de recirculation de gaz d'échappement est un composant HT.

3. Système de refroidissement selon la revendication 1 ou 2, **caractérisé en ce que** l'au moins un composant NT est un condenseur (27) d'une installation de climatisation du véhicule (1).

4. Système de refroidissement selon l'une quelconque des revendications précédentes, **caractérisé en ce que** l'au moins un composant MT est un refroidisseur d'air de suralimentation (37) du véhicule (1) et/ou **en ce que** l'au moins un composant MT est un composant électrique (39) du véhicule (1).

5. Système de refroidissement selon l'une quelconque des revendications précédentes, **caractérisé en ce que** le circuit de réfrigérant HT (4) présente un dispositif de refoulement HT (21) au moyen duquel le réfrigérant HT est refoulé à travers le circuit de réfrigérant HT (4) et/ou **en ce que** le circuit de réfrigérant HT (4) présente un dispositif de refroidissement HT (15) au moyen duquel le circuit de réfrigérant HT (4) peut être refroidi.

6. Système de refroidissement selon l'une quelconque des revendications précédentes, **caractérisé en ce que** le circuit de réfrigérant MT (35) présente un dispositif de refoulement MT (43) au moyen duquel le réfrigérant MT peut être refoulé à travers le circuit de réfrigérant MT (35) et/ou **en ce que** le circuit de réfrigérant MT (35) présente un dispositif de refroidissement MT (41) au moyen duquel le circuit de réfrigérant MT (35) peut être refroidi.

7. Système de refroidissement selon l'une quelconque des revendications précédentes, **caractérisé en ce que** le circuit de réfrigérant NT (23) présente un dispositif de refoulement NT (33) au moyen duquel le réfrigérant NT peut être refoulé à travers le circuit de réfrigérant NT (23) et/ou **en ce que** le circuit de réfrigérant NT (23) présente un dispositif de refroidissement NT (31) au moyen duquel le circuit de réfrigérant NT (23) peut être refroidi.

8. Système de refroidissement selon l'une quelconque des revendications précédentes, **caractérisé en ce qu'**il est prévu un dispositif de réglage et/ou de commande (65) au moyen duquel l'au moins un dispositif de commande de refroidissement du véhicule peut être réglé pour ajuster et/ou régler le refroidissement en fonction d'au moins un paramètre du véhicule.

9. Système de refroidissement selon la revendication 8, **caractérisé en ce que** le dispositif de commande de refroidissement est un dispositif de refoulement (21, 33, 43) d'un circuit de réfrigérant (4, 23, 35) et/ou **en ce que** le dispositif de commande de refroidissement est un dispositif de refroidissement (15, 31, 41) d'un circuit de réfrigérant (4, 23, 35).

10. Système de refroidissement selon la revendication 8 ou 9, **caractérisé en ce que** le dispositif de commande de refroidissement est un élément de ventilateur du véhicule (1) pour refroidir au moins un circuit de réfrigérant (4, 23, 35) du véhicule (1) et/ou **en ce que** le dispositif de commande de refroidissement est un dispositif de soupape (55, 59, 63) d'un circuit de réfrigérant (4, 23, 35) du véhicule (1), et/ou **en ce que** le dispositif de commande de refroidissement est un élément de clapet mobile du véhicule (1), dont le mouvement permet de bloquer et de libérer au moins en partie un flux d'air à travers une entrée d'air avant du véhicule (1).

11. Procédé pour faire fonctionner un système de refroidissement pour un véhicule (1), comprenant un circuit de réfrigérant à haute température (circuit de réfrigérant HT, 4) pour le refroidissement par liquide d'au moins un composant HT à refroidir du véhicule (1), qui est un moteur à combustion interne du véhicule (1), et comprenant un circuit de réfrigérant à basse température (circuit de réfrigérant NT, 23) présentant une plus basse température que le circuit de réfrigérant HT (4), pour le refroidissement par liquide d'au moins un composant NT à refroidir (25, 27, 29) du véhicule (1), un circuit de réfrigérant à moyenne température (circuit de réfrigérant MT, 35), présentant une plus basse température que le circuit de réfrigérant HT (4) et une plus haute température que le circuit de réfrigérant NT (23) étant prévu, au moyen duquel au moins un composant MT à refroidir (37, 39) du véhicule (1) est refroidi par liquide, ces trois circuits de réfrigérant (4, 23, 35) étant séparés fluidiquement les uns des autres,
un dispositif de récupération d'énergie (dispositif ER, 11) étant prévu, au moyen duquel de l'énergie peut être récupérée à partir d'une chaleur perdue du moteur à combustion interne (5) du véhicule (1), le dispositif ER (11) présentant au moins un échangeur de chaleur (13) acheminant de la chaleur, au moyen duquel de la chaleur perdue du moteur à combustion interne (5) peut être acheminée au dispositif ER (11), et le dispositif ER (11) présentant au moins un échangeur de chaleur (9) évacuant de la chaleur, au moyen duquel de la chaleur peut être évacuée du dispositif ER (11), **caractérisé en ce que** l'échangeur de chaleur (9) évacuant de la chaleur du dispositif ER (11) constitue un composant MT à refroidir et un composant NT à refroidir, et **en ce que** les trois circuits de réfrigérant (4, 23, 35) séparés fluidiquement les uns des autres et le dispositif de récupération d'énergie (11) sont connectés les uns aux autres par transfert thermique au moyen de l'échangeur de chaleur (9) évacuant de la chaleur, **en ce que** l'échangeur de chaleur (9) évacuant de la chaleur présente un premier canal d'écoulement (45) qui est parcouru par le réfrigérant HT du circuit de réfrigérant HT (4), **en ce que** l'échangeur de chaleur (9) évacuant de la chaleur présente un deuxième canal d'écoulement (47) qui est parcouru par le réfrigérant NT du circuit de réfrigérant NT (23), **en ce que** l'échangeur de chaleur (9) évacuant de la chaleur présente un troisième canal d'écoulement (49) qui est parcouru par le réfrigérant MT du circuit de réfrigérant MT (35), **en ce que** l'échangeur de chaleur (9) évacuant de la chaleur présente un quatrième canal d'écoulement (51) qui est parcouru par le fluide de travail à refroidir du dispositif ER (11), **en ce que** les canaux d'écoulement (45, 47, 49, 51) sont réalisés de manière à s'étendre parallèlement les uns aux autres et en ligne droite, et **en ce que** l'échangeur de chaleur (9) évacuant de la chaleur est connecté aux circuits de réfrigérant (4, 23, 35) et au dispositif ER (11) de telle sorte que les premier à troisième canaux d'écoulement (45, 47, 49) soient parcourus par le réfrigérant des circuits de réfrigérant (4, 23, 35) dans une première direction d'écoulement et que le quatrième canal d'écoulement (51) soit parcouru par le fluide de travail du dispositif ER (11) dans une deuxième direction d'écoulement opposée à la première direction d'écoulement.

12. Véhicule comprenant un système de refroidissement selon l'une quelconque des revendications 1 à 10 pour mettre en oeuvre un procédé selon la revendication 11.
